Europäisches Patentamt

European Patent Office

Office européen des brevets

(11) Publication number: **0 120 174**
**B1**

## EUROPEAN PATENT SPECIFICATION

(45) Date of publication of patent specification: 25.03.87

(51) Int. Cl.⁴: **F 23 R 3/04**

(21) Application number: **83630188.7**

(22) Date of filing: **11.11.83**

(54) **Combustor.**

(30) Priority: **28.02.83 US 470365**

(43) Date of publication of application:
**03.10.84 Bulletin 84/40**

(45) Publication of the grant of the patent:
**25.03.87 Bulletin 87/13**

(84) Designated Contracting States:
**DE FR GB IT SE**

(56) References cited:
**GB-A- 687 667**
**GB-A-1 179 166**
**GB-A-2 017 289**
**US-A-3 035 412**
**US-A-3 974 646**
**US-A-4 373 325**

(73) Proprietor: **UNITED TECHNOLOGIES CORPORATION**
**United Technologies Building 1, Financial Plaza**
**Hartford, CT 06101 (US)**

(72) Inventor: **Markowski, Stanley J.**
**538 Forbes Street**
**East Hartford Connecticut 06118 (US)**

(74) Representative: **Weydert, Robert et al**
**OFFICE DENNEMEYER S.à.r.l. P.O. Box 1502**
**L-1015 Luxembourg (LU)**

Courier Press, Leamington Spa, England.

# Description

This invention relates to a combustor for a gas turbine engine including wall means extending axially relative to the engine's center line defining an enclosed combustion zone closed at the fore end and opened at the aft end, a fuel and air injector module mounted in an aperture on the closed fore end of said combustion zone for admitting fuel and air mixture into the front of said combustion zone where combustion ensues, said module including a pair of concentric tubes spaced radially relative to each other for defining a central passageway for admitting secondary combustion air into the combustion zone, the outer of said pair of concentric tubes extending further axially into said combustion zone than the inner of said pair of concentric tubes, an outer casing member spaced radially from said outer of said pair of concentric tubes and concentric thereto, said outer casing member defining with the outer of said concentric tubes an annular passageway opened at its fore end for admitting primary air into said combustion zone, means for imparting a swirling momentum to said primary air, means for admitting fuel into said annular passageway for mixing with said primary air, whereby the fuel/air mixture egresses into said combustion zone and forms a recirculating zone radially spaced from the extended portion of said outer of said pair of concentric tubes adjacent said wall means, and means for admitting dilution air into the combustor.

Because of the high cost of fuel and a prevalent need and desire to conserve energy, a significant effort is being made to improve the overall performance of the gas turbine engine. Even though the combustor, an already highly developed component of the engine exhibits high efficiency, a great deal of consideration has been devoted to improve this part of the engine even more. Of course, this is understandable, particularly when a miniscule improvement in TSFC (thrust specific fuel consumption) can be equated to significant monetary savings.

As it is well known, the combustors in wide use today, of the type described above and disclosed for example in GB—A—2 017 289, whether of the can or annular type, admit a portion of the air for combustion and cooling through the front face of the combustor and admits the remaining portion along with dilution air through apertures formed in the outer wall of the burner cans in the can type and the outer and inner annular walls of the annular type as described for example in US—A—4 373 325. In either design the combustion and dilution air is admitted radially from the respective peripheries. Obviously, this requires a significant pressure drop to drive the combustion and dilution air into the center of the combustor. In today's engines, to achieve this end, it is necessary to re-accelerate the compressor discharge air after it already has been diffused. Not only does this inherently incur additional pressure losses, it imposes certain complexities in the design of the combustor.

GB—A—1 179 166 concerns a combustor having a nose piece at its forward end to split the compressor discharge air flow into an inner and an outer stream. The nose piece has apertures in its leading edge to direct compressor discharge air with minimum pressure loss to an area upstream of an air injector. GB—A—1 179 166 does not address the problem of directing air with reduced pressure losses into the combustion zone.

The object of the invention is to provide an improved combustor having reduced pressure losses, a short length and minimized poluant emissions without imposing complexities as regards the design of the combustor.

To achieve this the combustor is characterized in that said fuel and air injector module is designed for admitting therethrough substantially all of said combustion air and dilution air centrally into the combustor at the fore end thereof.

In the preferred embodiment a fuel and air admission module is mounted on the front end of the burner. In an annular burner, a plurality of these modules are discretely located about the centerline of the combustor. In one embodiment, compressor discharge air, about 75 percent of the combustor airflow, enters the burner through concentric annular passages in these fuel injector modules. The majority of the air, about 60 percent of the burner airflow, passes through swirl vanes disposed in the center of the module and discharges in the combustion zone where it will function as both secondary combustion air and dilution air. The remaining 15 percent of combustor airflow entering the front end of the combustor is removed from the outer radii of the entering stream and passes through an annular passage to become the primary or pivot stage airflow. This flow is also swirled and fuel is introduced into the primary air before it is discharged from the module. The fuel is introduced through a number of local injection sources around the periphery of the primary air passage with the spray being in substantially the axial downstream direction. Upon discharge, the swirling fuel air mixture is diverted radially outward by centrifugal forces and burns in a toroidal recirculation zone that is radially disposed around the centerline of the module near the junction of the front wall and the liner of the combustor. The primary stage air and fuel flow are optimized to provide stochiometric mixture strengths in this combustion zone at idle to minimize carbon monoxide and unburned hydrocarbon emissions. The overall flow structure in the combustion zone is one of a swirling jet of combustion inlet air emanating from the center of the inlet module and surrounded by the hot combustion products in the pilot combustion zone. Because of the low density of the combustion gases relative to the central jet, the angular momentum of the swirling flow field decreases with increasing radius from the module centerline. This leads to instability of the interface between the central jet and the pilot combustion products with subsequent rapid mixing.

At high power levels additional fuel is admitted to the burner and the outer periphery of the central air jet is vitiated with the pilot or primary stage acting as an ignition source. This fuel is introduced through the same sources used to fuel the pilot stage by tuning the spray-pressure drop characteristics to provide a spray with higher axial momentum at the higher fuel flows so that the majority of the fuel is sprayed into the interface region and only the lower momentum elements of the spray are carried radially outward into the pilot stage recirculation zone. The fuel arriving in the interface region is rapidly vaporized by the pilot combustion products and is burned rapidly at the interface with the central jet in a manner conducive to low $NO_x$ and smoke production.

At the completion of combustion, the combustion products are concentrated around the periphery of the combustion zone surrounding the nonvitiated central core of the center air jet. The centrifugal instability of the interface between these gases persists and the core of the central jet continue to mix, in the same rapid mode, with the combustion products to produce a uniform temperature distribution with inherently low pattern factor at the combustor discharge. The rapid progress of both the initial combustion and the final "inside out" dilution of the combustion products leads to short combustor liner length requirements. This, in turn, minimizes liner cooling air and leaves more airflow available for use in optimizing stoichiometry and exit temperature distribution.

The fuel and air admission injector is fabricated into a module adapted to be utilized for different combustors. The concept is adaptable for both annular and can combustors or the combination thereof.

Other features and advantages will be apparent from the specification and claims and from the accompanying drawings which illustrate an embodiment of the invention.

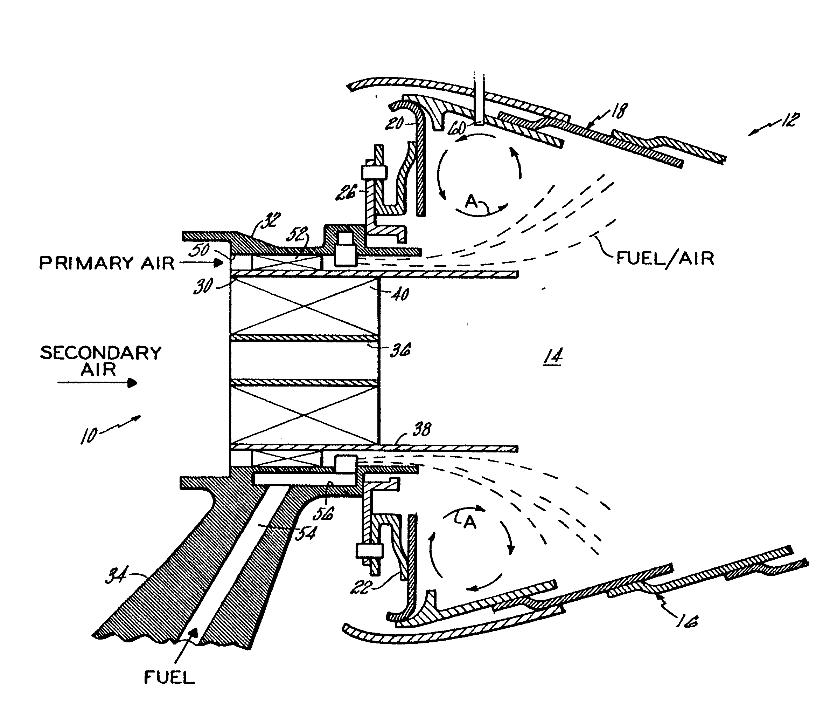

The sole Figure is a schematic illustration of the fuel/air injector of this invention.

While in its preferred embodiment this invention will be described when employed in an annular type of burner, it is to be understood, as will be appreciated by one skilled in this art that other types of burners can similarly accommodate this invention. Only that portion of the engine and more particularly of the combustor is shown that conveniently describes the invention as the engine is well known in the art.

As noted from the Figure, the fuel/air injector generally indicated by reference numeral 10 is mounted on the front end of the combustor generally indicated by reference numeral 12. As is typical in annular combustors, the combustion zone 14 is formed within the constraints of the inner, louvered liner 16 and the outer louver liner 18 formed about the centerline of the engine and the engine's shaft defining an annular passageway that leads the product of combustion to the turbine mounted adjacent the aft end of the combustor. A dome member 20 caps the front end of the annular combustor and the fuel/air injector is supported to the heat shield 22 in an aperture formed in the dome on the front end of the combustor.

The fuel/air injector 10 comprises a disc shaped mounting member 26 that is held in slidable relationship with the U-shaped arm of the heat shield 22. A central passage 30 formed from a pair of spaced concentric tubes is supported to the outer ring 32 and support member 34. The inner tube 36 forms a straight-through passageway and the outer tube 38 carries a plurality of turning vanes 40 that imparts a swirling motion to the incoming air. The tube 38 extends axially substantially into the combustor chamber and forms a barrier between the primary burning zone and the secondary burning zone.

As will be apparent from the foregoing compressor discharge air entering through the central passageway 30 supplies the secondary airflow and constitutes say 60% of the total airflow into the combustor, and functions as the combustion air and dilution air. Say, 15% of the combustor airflow enters the front end through the annular passage 50 and passes through the swirl vanes 52, which in a conventional manner imparts a swirling motion thereto and this constitutes the primary or pilot stage airflow.

Fuel admitted from a suitable source through passageway 54, annular passage 56 is introduced to the swirling air in the primary passage 50 and is discharged from the module into the combustion zone. The combined swirling fuel/air mixture upon discharging is diverted radially outward by centrifugal forces toward the combustion liner walls 16 and 18 and burns in a toroidal recirculation zone as shown by the arrows referenced by letter A. A suitable fuel nozzle is contemplated and any of the well known types may be employed. Further, additional fuel may be added at this juncture, either through the same nozzle or a separate nozzle for the higher powered operation. It is also contemplated within the scope of this invention that an additional fuel line and nozzle may be incorporated into the secondary air passage to accommodate the higher power regimes.

A suitable igniter generally illustrated by reference numeral 60 would be utilized for starting-up and re-ignition operations. Igniters are well known in the art and are not deemed part of the invention and for convenience and simplicity a description thereof is omittted from the description.

The remaining portion of the compressor discharge air is admitted to the liner walls where it is utilized in the conventional manner for cooling purposes.

It is apparent from the foregoing that because the major portion of the air is admitted centrally of the combustor zone, it mixes with the products of combustion in a manner that forces the air toward the peripheral walls of the liner. This, in contrast to admitting the combustion air and dilution air from the outer walls radially toward the center of the combustor demands a lesser amount of pressure drop.

Additionally, the combustion products after completion of combustion are concentrated around the periphery of the combustion zone surrounding the nonvitiated central core of the center air jet. The centrifugal instability of the interface between these zones persists and the core of the central jet continues to mix, in the same rapid mode, with the combustion products to produce a substantially uniform temperature distribution.

**Claims**

1. Combustor for a gas turbine engine including wall means (16, 18) extending axially relative to the engine's center line defining an enclosed combustion zone (14) closed at the fore end and opened at the aft end, a fuel and air injector module (10) mounted in an aperture on the closed fore end of said combustion zone (14) for admitting fuel and air mixture into the front of said combustion zone (14) where combustion ensues, said module (10) including a pair of concentric tubes (36, 38) spaced radially relative to each other for defining a central passageway (30) for admitting secondary combustion air into the combustion zone (14), the outer (38) of said pair of concentric tubes (36, 38) extending further axially into said combustion zone (14) than the inner (36) of said pair of concentric tubes (36, 38), an outer casing member (32) spaced radially from said outer (38) of said pair of concentric tubes (36, 38) and concentric thereto, said outer casing member (32) defining with the outer (38) of said concentric tubes (36, 38) an annular passageway (50) opened at its fore end for admitting primary air into said combustion zone (14), means (52) for imparting a swirling momentum to said primary air, means (54, 56) for admitting fuel into said annular passageway (50) for mixing with said primary air, whereby the fuel/air mixture egresses into said combustion zone (14) and forms a recirculating zone (A) radially spaced from the extended portion of said outer (38) of said pair of concentric tubes (38, 36) adjacent said wall means and means for admitting dilution air into the combustor, characterized in that said fuel and air injector module (10) is designed for admitting therethrough substantially all of said combustion air and dilution air centrally into the combustor at the fore end thereof.

2. Combustor according to claim 1, characterized in that said combustion zone (14) is an annular combustion zone (14) formed between an inner annular louvered liner (16) and an outer annular louvered liner (18) radially spaced from the inner liner (16), that a dome member (20) joins said inner and outer liners (16, 18) for capping the front end of said annular combustion zone (14), and that a plurality of fuel and air injectors (10) are circumferentially spaced about said dome for feeding air and fuel into the front end of said combustion zone (14) so that the flow of air and fuel flows radially toward said inner annular louvered liner (16) and said outer annular louvered liner (18).

3. Combustor according to claim 1, characterized by at least one igniter (60) mounted in an opening in said liners (16, 18) adjacent said recirculation zone (A).

4. Combustor according to any one of claims 1 to 3, characterized by vanes (40) supported between said concentric tubes (36, 38) to impart a swirling motion to a portion of said secondary combustion air.

**Patentansprüche**

1. Brennkammer für ein Gasturbinentriebwerk, mit einer Wandvorrichtung (16, 18), die sich relativ zu der Triebwerksmittellinie axial erstreckt und eine geschlossene Verbrennungszone (14) begrenzt, die am vorderen Ende geschlossen und am hinteren Ende geöffnet ist, mit einem Brennstoff- und Luftinjektormodul (10), der in einem Loch an dem geschlossenen vorderen Ende der Verbrennungszone (14) befestigt ist, zum Einlassen des Brennstoff- und Luftgemisches in das vordere Ende der Verbrennungszone (14), wo die Verbrennung vonstatten geht, wobei der Modul (10) zwei konzentrische Rohre (36, 38) aufweist, die in radialen Abstand voneinander angeordnet sind, so daß sie einen zentralen Durchlaß (30) zum Einlassen von Sekundärverbrennungsluft in die Verbrennungszone (14) begrenzen, wobei das äußere (38) der beiden konzentrischen Rohre (36, 38) sich weiter axial in die Verbrennungszone (14) erstreckt als das innere (36) der beiden konzentrischen Rohre (36, 38), mit einem äußeren Gehäuseteil (32), das in radialem Abstand von dem äußeren (38) der beiden konzentrischen Rohre (36, 38) angeordnet und zu diesem konzentrisch ist, wobei das äußere Gehäuseteil (32) mit dem äußeren (38) der konzentrischen Rohre (36, 38) einen ringförmigen Durchlaß (50) begrenzt, der an seinem vorderen Ende geöffnet ist, um Primärluft in die Verbrennungszone (14) einzulassen, mit einer Vorrichtung (52), mittels welcher der Primärluft ein Wirbelmoment gegeben werden kann, mit einer Vorrichtung (54, 56) zum Einlassen des Brennstoffes in den ringförmigen Durchlaß (50) zur Vermischung mit der Primärluft, wodurch das Brennstoff/Luftgemisch in die Verbrennungszone (14) austritt und eine Rezirkulationszone (A) in radialem Abstand von dem verlängerten Teil des äußeren (38) der beiden konzentrischen Rohre (38, 36) an der Wandvorrichtung bildet, und mit einer Vorrichtung zum Einlassen von Verdünnungsluft in die Brennkammer, dadurch gekennzeichnet, daß der Brennstoff- und Luftinjektormodul (10) so ausgebildet ist, daß er im wesentlichen die gesamte Verbrennungsluft und die Verdünnungsluft zentral in die Brennkammer am vorderen Ende einläßt.

2. Brennkammer nach Anspruch 1, dadurch gekennzeichnet, daß die Verbrennungszone (14) eine ringförmige Verbrennungszone (14) ist, die zwischen einem inneren, ringförmigen, jalousieartig ausgebildeten Flammrohr (16) und einem äußeren ringförmigen, jalousieartig ausgebildeten Flammrohr (18) in radialem Abstand von dem inneren Flammrohr (16) gebildet ist, daß ein Kuppelteil (20) das innere und das äußere Flammrohr (16, 18) miteinander verbindet, um das vordere Ende der ringförmigen Verbrennungszone (14) abzudecken, und daß mehrere Brennstoff- und Luftinjektoren (10) in umfangsmäßigem Abstand um die Kuppel angeordnet sind, um Luft und Brennstoff in das vordere Ende der Verbrennungszone (14) einzuleiten, so daß die Strömung von Luft und Brennstoff radial zu dem inneren, ringförmigen, jalousieartig ausgebildeten Flammrohr (16) und zu dem äußeren, ringförmigen, jalousieartig ausgebildeten Flammrohr (18) geht.

3. Brennkammer nach Anspruch 1, gekennzeichnet durch wenigstens einen Zünder (60), der in einer Öffnung in den Flammrohren (16, 18) nahe der Rezirkulationszone (A) befestigt ist.

4. Brennkammer nach einem der Ansprüche 1 bis 3, gekennzeichnet durch Leitbleche (40), die zwischen den konzentrischen Rohren (36, 38) befestigt sind, um einem Teil der Sekundärverbrennungsluft eine Wirbelbewegung zu geben.

## Revendications

1. Chambre de combustion pour turbine à gaz comprenant des moyens formant paroi (16, 18) s'étendant axialement par rapport à la ligne médiane de la turbine pour délimiter une zone de combustion enclose (14) fermée à son extrémité avant et ouverte à son extrémité arrière, un module d'injection de combustible et d'air (10) monté dans une ouverture à l'extrémité avant fermée de ladite zone de combustion (14) pour admettre un mélange de combustible et d'air dans la partie avant de ladite zone de combustion (14) où s'effectue la combustion, ledit module (10) comprenant une paire de tubes concentriques (36, 38) espacés radialement l'un par rapport à l'autre pour délimiter un passage central (30) destiné à admettre de l'air de combustion secondaire dans la zone de combustion (14), le tube extérieur (38) de ladite paire de tubes concentriques (36, 38) s'étendant axialement plus loin dans ladite zone de combustion (14) que le tube intérieur (36) de ladite paire de tubes concentriques (36, 38), un élément d'enveloppe extérieure (32) espacé radialement par rapport au tube extérieur (38) de ladite paire de tubes concentriques (36, 38) et concentriquement par rapport à lui, ledit élément d'enveloppe extérieure (32) délimitant avec le tube extérieur (38) des tubes concentriques (36; 38) un passage annulaire (50) ouvert à son extrémité avant pour admettre de l'air primaire dans la zone de combustion (14), des moyens (52) destinés à communiquer un mouvement tourbillonnant audit air primaire, des moyens (54, 56) destinés à admettre du combustible dans le passage annulaire (50) en vue de son mélange avec ledit air primaire, le mélange de combustible/air sortant pour pénétrer dans la zone de combustion (14) et formant une zone de recirculation (A) espacée radialement par rapport à la portion prolongée dudit tube extérieure (38) de ladite paire de tube concentriques (36, 38) adjacents aux moyens formant paroi et des moyens destinés à admettre de l'air de dilution dans la chambre de combustion, caractérisée en ce que ledit module d'injection de combustible et d'air (10) est conçu pour être traversé par sensiblement la totalité de l'air de combustion et d'air de dilution qui pénètrent sensiblement centralement dans la chambre de combustion à l'extrémité avant de celle-ci.

2. Chambre de combustion selon la revendication 1, caractérisée en ce que ladite zone de combustion (14) est une zone de combustion annulaire (14) formée entre une garniture annulaire intérieure à volets (16) et une garniture annulaire extérieure à volets (18) espacée radialement par rapport à la garniture intérieure (16), en ce qu'un élément calotte (20) relie entre elles les garnitures intérieure et extérieure (16, 18) pour recouvrir l'extrémité avant de ladite zone de combustion annulaire (14), et en ce qu'une pluralité d'injecteurs de combustible et d'air (10) sont espacés circonférentiellement autour de ladite calotte pour alimenter en air et combustible l'extrémité avant de ladite zone de combustion (14) de sorte que le courant d'air et de combustible passe radialement vers ladite garniture annulaire intérieure à volets (16) et ladite garniture annulaire extérieure à volets (18).

3. Chambre de combustion selon la revendication 1, caractérisée par au moins un allumeur (60) monté dans une ouverture desdites garnitures (16, 18) à proximité de ladite zone de recirculation (A).

4. Chambre de combustion selon l'une quelconque des revendications 1 à 3, caractérisée par des déflecteurs (40) portés entre lesdits tubes concentriques (36, 38) pour communiquer un mouvement tourbillonnant à une portion de ladite air de combustion secondaire.